# EUROPÄISCHE PATENTSCHRIFT

(11) **EP 2 253 181 B1**
(45) Veröffentlichungstag und Bekanntmachung des Hinweises auf die Patenterteilung: **26.11.2014**
(21) Anmeldenummer: 09721370.6
(22) Anmeldetag: 18.03.2009
(51) Int. Cl.: H05B 3/42, B29C 45/27, H01R 4/02, B05C 17/005

(54) **ANSCHLUSSSTIFT UND ELEKTRISCHER ANSCHLUSS**
CONNECTING PIN AND ELECTRICAL CONNECTION
BROCHE DE RACCORDEMENT ET RACCORDEMENT ÉLECTRIQUE

(30) Priorität: 20.03.2008 DE 102008015378
(43) Veröffentlichungstag der Anmeldung: 24.11.2010
(73) Patentinhaber: Günther Heisskanaltechnik GmbH, 35066 Frankenberg (DE)
(72) Erfinder: GÜNTHER, Herbert, 35108 Allendorf (DE); SOMMER, Siegrid, 35099 Burgwald (DE); KRETZSCHMAR, Christel, 01809 Dohna (DE); PARTSCH, Uwe, 01309 Dresden (DE)
(74) Vertreter: Patentanwälte Olbricht Buchhold Keulertz
(86) Internationale Anmeldenummer: PCT/EP2009/001992
(87) Internationale Veröffentlichungsnummer: WO 2009/115306

(56) Entgegenhaltungen:
- WO-A-2004/043672
- WO-A-2005/053361
- FR-A- 2 635 616
- US-A1- 2003 162 415
- US-A1- 2005 280 032

## Beschreibung

Die Erfindung betrifft einen Anschlussstift zum Erzeugen eines elektrischen Anschlusses einer elektrischen Heizeinrichtung einer Spritzgießdüse gemäß dem Oberbegriff von Anspruch 1 sowie einen elektrischen Anschluss nach Anspruch 6.

Elektrische Anschlüsse einer elektrischen Heizeinrichtung einer Spritzgießdüse sind im Stand der Technik in verschiedenen Ausgestaltungen bekannt. Eine Möglichkeit zum Erzeugen eines solchen elektrischen Anschlusses besteht beispielsweise darin, eine Anschlussleitung, die mit einer Stromquelle oder einem Regelgerät verbunden wird, mithilfe einer Kontaktpaste auf einer Heizleiterbahn einer elektrischen Heizeinrichtung zu befestigen. Die Kontaktpaste ist elektrisch leitend, wodurch der elektrische Anschluss der Heizeinrichtung erzeugt wird.

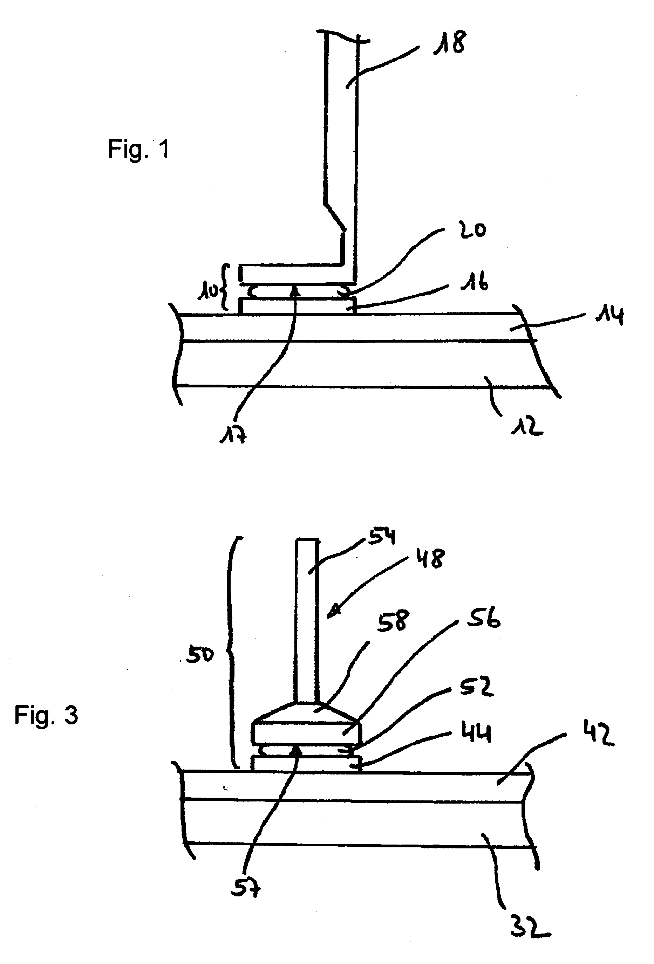

Fig. 1 zeigt eine schematische Ansicht einer bekannten elektrischen Verbindung 10. Die Bezugsziffer 12 bezeichnet ein elektrisch leitendes Substrat, bei dem es sich beispielsweise um das Materialrohr einer Heißkanaldüse handeln kann. Die Bezugsziffer 14 bezeichnet eine Dielektrikumschicht, die als elektrischer Isolator auf dem Substrat 12 aufgetragen ist. Auf der Dielektrikumschicht ist eine Heizleiterbahn 16 aufgebracht, die aus einem ersten elektrisch leitenden Material besteht und Teil einer nicht näher dargestellten elektrischen Heizeinrichtung ist. Die Bezugsziffer 18 bezeichnet eine Anschlussleitung, die unmittelbar oder über eine elektrische Leitung mit einer (nicht dargestellten) Stromquelle verbunden ist. Letztere dient dazu, die Heizleiterbahn 16 der Heizeinrichtung mit elektrischer Energie zu versorgen. Die Anschlussleitung 18 ist ein elektrisch leitender Draht oder eine Litze aus einem zweiten elektrisch leitenden Material, das sich von demjenigen der Heizleiterbahn 16 unterscheidet. Zur Ausbildung der Anschlussfläche 17 ist die Anschlussleitung 18 an ihrem freien Ende umgebogen oder mit einem abgeflachten Fuß versehen, so dass sich in diesem Bereich eine im Wesentlichen L-förmige Form ergibt. Zur Erzeugung der elektrischen Verbindung 10 ist die Anschlussfläche 17 der Anschlussleitung 18 über eine elektrisch leitende Kontaktpaste 20 auf der Heizleiterbahn 16 befestigt, so dass die Anschlussleitung 18 und die Heizleiterbahn 16 elektrisch miteinander verbunden sind.

Die Abscherfestigkeit der in Fig. 1 dargestellten elektrischen Verbindung 10 hängt im Wesentlichen von der Haftung zwischen der Anschlussleitung 18 und der Kontaktpaste 20 einerseits und zwischen der Kontaktpaste 20 und der Heizleiterbahn 16 andererseits ab. Da jedoch das elektrisch leitende erste Material der Heizleiterbahn 16 von dem zweiten elektrisch leitenden Material der Anschlussleitung 18 verschieden ist, muss das Material der Kontaktpaste 20 derart gewählt werden, dass sowohl eine gute Haftfähigkeit in Bezug auf das erste elektrisch leitende Material der Heizleiterbahn 16 als auch eine gute Haftfähigkeit in Bezug auf das zweite elektrisch leitende Material der Anschlussleitung 18 erzielt wird. Beides zugleich ist nicht zu erreichen, so dass die Wahl der Kontaktpaste meist nur eine Kompromisslösung darstellt. Folglich lässt sich mit der zuvor beschrieben Technik keine Verbindung mit optimaler Abscherfestigkeit erzielen. Je nach Art der Kontaktpaste können sich bei höheren Temperaturen zudem Haftprobleme ergeben, was insbesondere bei Heißkanaldüsen von Nachteil ist, insbesondere dann, wenn sich die Kontakte ganz oder teilweise lösen.

Ausgehend von diesem Stand der Technik ist es eine Aufgabe der vorliegenden Erfindung, einen alternativen elektrischen Anschluss einer elektrischen Heizeinrichtung einer Spritzgießdüse zu schaffen, bei dem die eingangs genannten Probleme zumindest teilweise behoben werden.

Ziel der Erfindung ist es, diese und weitere Nachteile des Standes der Technik zu vermeiden und einen alternativen elektrischen Anschluss für eine elektrische Heizeinrichtung einer Spritzgießdüse zu schaffen, der optimale Hafteigenschaften aufweist. Insbesondere soll die Abscherfestigkeit deutlich verbessert werden, so dass der Anschluss auch bei stärkeren mechanischen Belastungen und/oder höheren Temperaturen eine dauerhaft feste und gut leitende Verbindung gewährleistet.

Hauptmerkmale der Erfindung sind im kennzeichnenden Teil von Anspruch 1 und in Anspruch 6 angegeben. Ausgestaltungen sind Gegenstand der Ansprüche 2 bis 5 und 7 bis 14.

Zur Lösung dieser Aufgabe schafft die vorliegende Erfindung einen Anschlussstift zum Erzeugen eines elektrischen Anschlusses einer elektrischen Heizeinrichtung einer Spritzgießdüse, wobei der Anschlussstift derart ausgebildet ist, dass er mithilfe zumindest einer elektrisch leitenden Haftschicht und/oder einer Kontaktpaste an der Heizeinrichtung befestigbar ist. Erfindungsgemäß weist der Anschlussstift einen stiftförmigen Abschnitt und einen mit der zumindest einen Haftschicht oder mit der Kontaktpaste in Kontakt kommenden Verbindungsabschnitt auf, wobei der Verbindungsabschnitt dazu dient, Zugbelastungen, die auf den erfindungsgemäßen Anschlussstift wirken, in alle Richtungen gleichmäßig zu verteilen, um ein Abschälen bzw. ein Abscheren des Anschlussstiftes bei erhöhten Zugbelastungen zu verhindern. Im Gegensatz zum eingangs genannten Stand der Technik kann die Abscherfestigkeit und somit die Gesamtfestigkeit des elektrischen Anschlusses verbessert werden.

Bei der Heizeinrichtung handelt es sich bevorzugt um eine Dickschichtheizung, die bahnförmig entlang der zu erwärmenden Bereiche der Spritzgießdüse aufgetragen ist. Eine solche Dickschichtheizung zeichnet sich insbesondere dadurch aus, dass sie einfach herstellbar ist und nur wenig Bauraum einnimmt, wodurch die Kompaktheit der Spritzgießdüse verbessert werden kann.

Der Verbindungsabschnitt ist bevorzugt scheibenförmig ausgebildet und weist einen größeren Durchmesser als der stiftförmige Abschnitt auf. Eine solche Struktur hat sich dahingehend als besonders vorteilhaft erwiesen, dass Zugbelastungen, die auf den stiftförmigen Abschnitt des Anschlussstiftes wirken, noch gleichmäßiger in alle Richtungen verteilt werden.

Die der Haftschicht oder der Kontaktpaste zugewandte Seite des Verbindungsabschnittes weist vorteilhaft eine Kontur auf, die an die Kontur desjenigen elektrisch leitenden Bauteils angepasst ist, auf dem der Verbindungsabschnitt mithilfe der zumindest einen elektrisch leitenden Haftschicht und/oder der Kontaktpaste befestigt wird. Wird der Verbindungsabschnitt beispielsweise auf einer Heizleiterbahn einer Dickschichtheizung angeordnet, die wiederum auf einem zylindrischen Materialrohr einer Spritzgießdüse positioniert ist, so wird die Kontur der der Haftschicht zugewandten Seite des Verbindungsabschnittes vorteilhaft derart gewählt, dass sie im Wesentlichen der Krümmung der Heizleiterbahn bzw. des Materialrohrs folgt.

Zwischen dem stiftartigen Abschnitt und dem Verbindungsabschnitt ist vorteilhaft zumindest ein Übergangsabschnitt vorgesehen, der derart ausgebildet ist, dass der Durchmesser des stiftförmigen Abschnittes und derjenige des Verbindungsabschnittes stufenartig oder kontinuierlich ineinander übergehen. Auf diese Weise wird ein sanfter Übergang zwischen dem stiftförmigen Abschnitt und dem Verbindungsabschnitt erzeugt, wodurch die Festigkeit des Anschlussstiftes beträchtlich erhöht wird. Bei einem solchen Aufbau kann der Anschlussstift noch größeren äußeren Beanspruchungen standhalten.

Ferner bezieht sich die vorliegende Erfindung auf einen elektrischen Anschluss einer elektrischen Heizeinrichtung einer Spritzgießdüse, der einen Anschlussstift der zuvor genannten Art aufweist.

Dabei sieht die Erfindung vor, dass zwischen dem Verbindungsabschnitt des Anschlussstifts und der Heizeinrichtung wenigstens zwei eine Verbindung erzeugende, elektrisch leitende Haftschichten angeordnet sind, wobei die Haftschichten unterschiedliche Eigenschaften, unterschiedliche Zusammensetzungen und/oder unterschiedliche Haftschichtmaterialien aufweisen.

Durch diese Anordnung ist es möglich, eine optimale Verbindung zwischen dem ersten Bauteil und dem zweiten Bauteil zu schaffen, obwohl diese aus unterschiedlichen Materialien bestehen, denn die zwischen den Bauteilen vorgesehen Haftschichten können bezüglich ihrer Eigenschaften, Zusammensetzungen und/oder Haftschichtmaterialien stufen- bzw. schichtweise an die jeweils unterschiedlichen Materialien der zu verbindenden Bauteile angepasst werden. Der Übergang von dem ersten elektrisch leitenden Bauteil aus dem ersten Material und dem zweiten elektrisch leitenden Bauteil aus dem zweiten Material erfolgt mithin relativ sanft, indem beispielsweise die erste Haftschicht an das erste Material des ersten Bauteils und die zweite Haftschicht an das Material der ersten Haftschicht sowie an das zweite Material des zweiten Bauteils angepasst wird. Auf diese Weise erreicht man zwischen den einzelnen Schichten eine jeweils optimale Haftfestigkeit und damit eine stets optimale Abscherfestigkeit zwischen den Bauteilen.

Dementsprechend sieht die Erfindung weiter vor, dass jede Haftschicht an eine jeweils direkt benachbart angeordnete Haftschicht und/oder an ein direkt benachbart angeordnetes elektrisch leitendes Bauteil angepasst ist, wobei bevorzugt jede Haftschicht derart gewählt oder ausgebildet ist, dass deren Eigenschaften, Zusammensetzung und/oder Haftschichtmaterial an die Eigenschaften, die Zusammensetzung und/oder das Haftschichtmaterial einer jeweils direkt benachbart angeordneten Haftschicht und/oder an die Eigenschaften, die Zusammensetzung und/oder das Material eines direkt benachbart angeordneten elektrisch leitenden Bauteils angepasst ist.

Mithin ist nicht mehr nur eine Kontaktschicht vorhanden, die zwei Bauteile aus unterschiedlichen Materialien elektrisch direkt miteinander verbinden muss. Die Verbindung erfolgt vielmehr in mehreren Stufen mit einer Schichtfolge, wobei jede Schicht eine optimierte, temperaturstabile Verbindung schafft, so dass die Bauteile dauerhaft fest miteinander verbunden sind und selbst stärkeren mechanischen Belastungen oder den im Spritzgießverfahren auftretenden thermischen Zyklen, insbesondere auch bei höheren Temperaturen, problemlos stand halten.

Dazu trägt insbesondere bei, wenn die Eigenschaften, die Zusammensetzung und/oder das Haftschichtmaterial einer jeden Haftschicht derart gewählt ist, dass deren Haftfähigkeit an die Haftfähigkeit einer jeweils direkt benachbart angeordneten Haftschicht und/oder an die Haftfähigkeit eines direkt benachbart angeordneten elektrisch leitenden Bauteils angepasst ist. Zweckmäßig hat dabei jede Haftschicht eine andere Haftfähigkeit.

Sämtliche Schichten werden damit bezüglich ihrer Hafteigenschaften schrittweise aufeinander abgestimmt bzw. aneinander angepasst, wodurch insgesamt eine äußerst feste und dauerhaft stabile Verbindung entsteht mit einer gegenüber herkömmlichen elektrischen Verbindungen der eingangs beschriebenen Art erhöhten Abscherfestigkeit.

Eine andere Eigenschaft, die zwischen den einzelnen Haftschichten und den Bauteilen aufeinander abgestimmt werden kann, ist die thermische Ausdehnung. Die aus unterschiedlichen Materialien gefertigen, elektrisch zu verbindenden Bauteile weisen oft Wärmeausdehnungskoeffizienten auf, die relativ weit auseinander liegen, so daß bei höheren Temperaturen Spannungen innerhalb der Verbindung auftreten können. Dies kann zur Rißbildung oder gar zum Ablösen der Bauteile führen. Mit Hilfe der einzelnen Haftschichten lassen sich die Wärmedehnungseigenschaften der zu verbindenden Bauteile schrittweise annähern, so daß beispielsweise beim Betrieb einer Heizvorrichtung innerhalb der Verbindung keine Spannungen mehr auftreten können.

Auf vorteilhafte Weise bilden die Haftschichten bezüglich ihrer Eigenschaften, ihrer Zusammensetzungen, ihrer Haftschichtmaterialien, ihrer Haftfähigkeiten und/oder ihrer Wärmeausdehnungseigenschaften mithin einen Gradientenaufbau, der nicht nur eine optimale elektrische Verbindung schafft, sondern zudem mechanisch und thermisch äußerst stabil ist.

Eine Weiterbildung der Erfindung sieht vor, dass das Haftschichtmaterial jeder Haftschicht ein Lötmaterial, eine Kontaktpaste oder eine Dickschichtpaste ist, wobei das Haftschichtmaterial jeder Haftschicht beispielsweise Silber, Palladium und/oder wenigstens einen Glasphasenanteil umfasst. Diese Materialien lassen sich gut miteinander kombinieren, so dass die gewünschten Eigenschaften bzw. Zusammensetzungen der Schichten erreicht werden können. Auch die Verarbeitung ist einfach zu realisieren, so lassen sich z.B. das Lötmaterial, die Kontaktpaste oder die Dickschichtpaste als Schichten im Siebdruckverfahren aufbringen. Der gesamte Schichtaufbau nimmt nur wenig Raum ein, so dass die Verbindung insgesamt relativ niedrig ist, was gerade bei Heißkanaldüsen von Vorteil ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Querschnittansicht eines bekannten elektrischen Anschlusses,
- Fig. 2: eine schematische Querschnittansicht einer Spritzgießdüse,
- Fig. 3: eine schematische Querschnittansicht eines elektrischen Anschlusses gemäß einer ersten Ausführungsform der vorliegenden Erfindung, die für die in Fig. 2 dargestellte Spritzgießdüse verwendet werden kann,
- Fig. 4: eine schematische Querschnittansicht einer elektrischen Verbindung gemäß einer zweiten Ausführungsform der vorliegenden Erfindung, die für die in Fig. 2 dargestellte Spritzgießdüse verwendet werden kann,
- Fig. 5: eine schematische Querschnittansicht einer alternativen Ausgestaltung eines Anschlussstiftes, der für die in den Fig. 3 und 4 dargestellten Anordnungen verwendet werden kann,
- Fig. 6A und B: schematische Querschnittansichten, die schematisch ein Herstellungsverfahren der in den Fig. 3 und 4 dargestellten Anschlussstifte zeigen, und
- Fig. 7A und B: schematische Querschnittansichten, die ein Herstellungsverfahren des in Fig. 5 dargestellten Anschlussstiftes erläutern.

Gleiche Bezugsziffern beziehen sich nachfolgend auf gleiche oder gleichartige Bauteile.

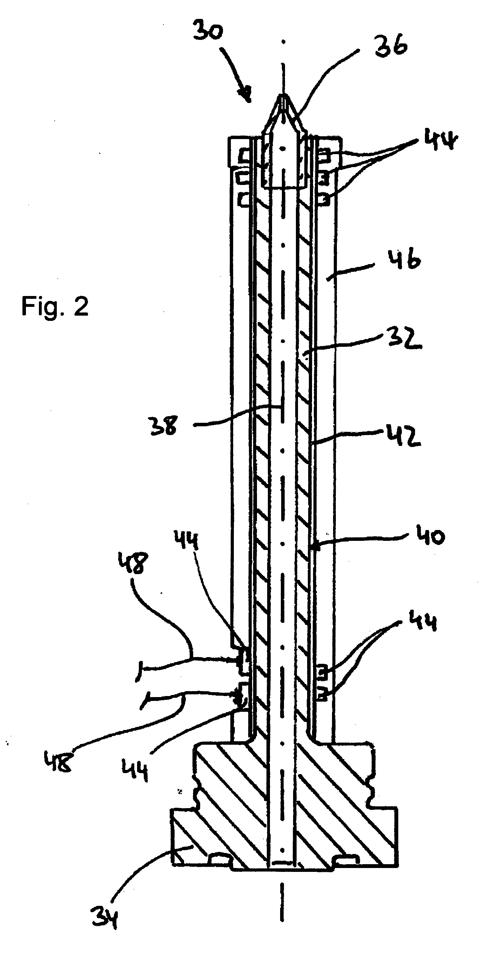

Die in Fig. 2 dargestellte Spritzgießdüse 30 hat als Bestandteil einer Spritzgussanlage für die thermoplastische Kunststoffverarbeitung zur Festlegung an einem (nicht dargestellten) Verteiler ein (ebenfalls nicht gezeigtes) Gehäuse, in das ein insgesamt zylindrisches Materialrohr 32 einsetzbar ist.

Ein an diesem endseitig ausgebildeter Sockel 34 schließt bündig mit dem Gehäuse ab und liegt dichtend an dem Verteiler an. In das sich in Axialrichtung längs erstreckende Materialrohr 32 ist endseitig eine Düsenspitze 36 eingesetzt, vorzugsweise eingeschraubt, die den in dem Materialrohr 32 ausgebildeten Strömungskanal 38 bis an die (nicht dargestellte) Ebene eines (ebenfalls nicht sichtbaren) Formnestes fortsetzt. Die Düsenspitze 36 kann bei gleicher Funktionsweise auch einteilig mit dem Materialrohr 32 ausgebildet sein.

Auf dem Umfang der Wandung 40 des aus Stahl gefertigten Materialrohrs 32 ist eine keramische Dielektrikumschicht 42 aufgebracht, auf der wiederum Heizleiterbahnen 44 angeordnet sind, die sich bahnförmig, mäanderförmig oder in sonstiger Art und Weise entlang des Außenumfangs der Dielektrikumschicht 42 erstrecken. Ferner ist über den Heizleiterbahnen 44 eine äußere Abdeckschicht 46 vorgesehen, welche die Heizleiterbahn 44 und die darunter liegende Dielektrikumschicht 42 nach außen hin abdeckt und elektrisch isoliert. Die beliebig gestaltbaren Heizleiterbahnen 44 können je nach erforderlicher Leistung in unterschiedlicher Dichte und Anordnung auf der Dielektrikumschicht 42 aufgebracht sein. Hierdurch lässt sich bei Bedarf eine definierte Temperaturverteilung innerhalb des Materialrohrs 32 erzielen.

Um die Heizleiterbahn 44 mit elektrischer Energie zu versorgen, sind diese über elektrische Anschlüsse mit Anschlussleitungen 48 verbunden, die wiederum mit einer nicht näher dargestellten Energiequelle elektrisch verbunden werden können.

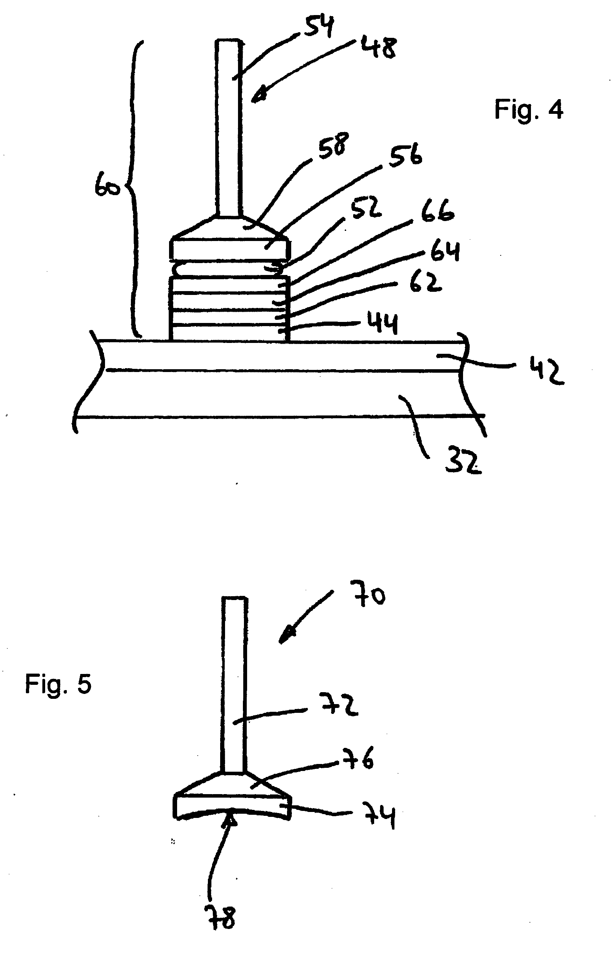

Die Fig. 3 und 4 zeigen zwei Ausführungsformen solcher elektrischen Anschlüsse 50, 60, die gemäß der vorliegenden Erfindung ausgestaltet sind.

Fig. 3 ist eine schematische Querschnittansicht einer ersten Ausführungsform eines elektrischen Anschlusses 50 gemäß der vorliegenden Erfindung.

Fig. 3 zeigt das Materialrohr 32, die auf dem Materialrohr 32 ausgebildete Dielektrikumschicht 42 und die auf der Dielektrikumschicht 42 angeordnete Heizleiterbahn 44, die aus einem ersten elektrisch leitenden Material hergestellt ist, beispielsweise aus Ag, Pd und - je nach Ausführungsform - mit wenigstens einer Glasphase. Die Heizleiterbahn 44 ist elektrisch mit einem Anschlussstift 48 verbunden, der aus einem zweiten elektrisch leitenden Material hergestellt ist, vorliegend aus Silber. Zwischen der Heizleiterbahn 44 und dem Anschlussstift 48 ist eine Kontaktpaste 52 vorgesehen, die vorliegend aus Silber hergestellt ist.

Die Heizleiterbahn 44, die Kontaktpaste 52 und der Anschlussstift 48 bilden gemeinsam den elektrischen Anschluss 50 der Heinzeinrichtung der Spritzgießdüse 30. Der Anschlussstift 48 umfasst einen stiftförmigen Abschnitt 54 und einen Verbindungsabschnitt 56, dessen Kontaktfläche 57 über die Kontaktpaste 52 mit der Heizleiterbahn 44 in Kontakt kommt. Der Verbindungsabschnitt 56 ist scheibenförmig ausgebildet und weist einen größeren Durchmesser als der stiftförmige Abschnitt 54 auf, um die Kontaktfläche 57 zu vergrößern und um Zugbeanspruchungen, die auf den stiftförmigen Abschnitt 54 wirken, gleichmäßig in alle Richtungen zu verteilen. Zwischen dem stiftförmigen Abschnitt 54 und dem Verbindungsabschnitt 56 ist ein Übergangsabschnitt 58 vorgesehen, der vorliegend kegelstumpfförmig ausgebildet ist, so dass der Durchmesser des stiftförmigen Abschnittes 54 und derjenige des Verbindungsabschnittes 56 kontinuierlich ineinander übergehen. Durch den Übergangsabschnitt 58 wird die Festigkeit des Anschlussstiftes 48 und somit dessen Lebensdauer erhöht. Es sollte klar sein, dass der Übergangsabschnitt 58 auch eine andere Form aufweisen kann, beispielsweise eine solche, bei welcher der Durchmesser des stiftförmigen Abschnittes 54 und derjenige des Verbindungsabschnittes 56 stufenartig ineinander übergehen.

Der Anschlussstift 48 mit dem zuvor beschriebenen Aufbau weist gegenüber der L-förmig gebogenen Anschlussleitung 18 gemäß Fig. 1 den Vorteil auf, dass die Zugbelastungen, die auf den elektrischen Anschluss 50 wirken, noch besser und gleichmäßiger in alle Richtungen verteilt werden.

Fig. 4 ist eine schematische Querschnittansicht einer alternativen Ausführungsform eines elektrischen Anschlusses 60 gemäß der vorliegenden Erfindung. Der elektrische Anschluss 60 unterscheidet sich dahingehend von dem in Fig. 3 dargestellten elektrischen Anschluss 50, dass zwischen der Heizleiterbahn 44 und der Kontaktpaste 52 der Reihe nach eine erste elektrisch leitende Haftschicht 62, die vorliegend aus AgPd in einem Verhältnis von 3:1 hergestellt ist, eine zweite elektrisch leitende Haftschicht 64, die vorliegend aus AgPd in einem Verhältnis von 9:1 hergestellt ist, und eine dritte elektrisch leitende Haftschicht 66 vorgesehen sind, die vorliegend aus AgPd in einem Verhältnis von 27:1 hergestellt ist. Die einzelnen Schichten können bei Bedarf auch verschiedene Glasphasenanteile enthalten.

Bei den elektrisch leitenden Haftschichten 52, 54, 56 handelt es sich um Lötmaterialien oder Dickschichtpasten, die z.B. im Siebdruck aufgetragen werden. Die Heizleiterbahn 44, die erste elektrisch leitende Haftschicht 62, die zweite elektrisch leitende Haftschicht 64, die dritte elektrisch leitende Haftschicht 66, die Kontaktpaste 52 und der Kontaktstift 48 bilden gemeinsam den elektrischen Anschluss 60.

Durch die Wahl der Materialien der elektrisch leitenden Haftschichten, deren Silbergehalt in Richtung der Heizleiterbahn 44 abnimmt, wird ein schrittweiser Übergang von dem Material des Anschlussstiftes 48 zu dem Material der Heizleiterbahn 44 erzielt, wodurch die Haftfähigkeit zwischen den einzelnen Komponenten des elektrischen Anschlusses 60 und somit die Abscherfestigkeit des gesamten elektrischen Anschlusses 60 gegenüber derjenigen des in Fig. 3 dargestellten elektrischen Anschlusses 50 verbessert wird. Zudem wird die Temperaturstabilität des elektrischen Anschlusses 60 positiv beeinflusst, was insbesondere bei dem vorliegenden Anwendungsgebiet von großem Vorteil ist.

Es sollte klar sein, dass die Anzahl der elektrisch leitenden Haftschicht nicht auf drei Schichten beschränkt ist. Alternativ können auch zwei Haftschichten oder mehr als drei Haftschichten vorgesehen sein. Die optimale Anzahl von Haftschichten kann in Abhängigkeit vom Anwendungsfall beispielsweise experimentell ermittelt werden. Ferner ist die Kontaktpaste 52 optional vorgesehen und kann entsprechend weggelassen werden.

Fig. 5 ist eine schematische Ansicht, die einen alternativen Anschlussstift 70 zeigt, der für die in den Fig. 3 und 4 dargestellten elektrischen Anschlüsse 50 und 60 eingesetzt werden kann. Ähnlich wie der Anschlussstift 48 umfasst der Anschlussstift 70 einen stiftförmigen Abschnitt 72, einen im Wesentlichen tellerförmigen Verbindungsabschnitt 74 und einen Übergangsabschnitt 76, der den stiftförmigen Abschnitt 72 mit dem Verbindungsabschnitt 74 verbindet. Im Gegensatz zu dem Anschlussstift 48 ist eine Kontaktfläche 78 des Verbindungsabschnittes 74, die beim Erzeugen des elektrischen Anschlusses über die Kontaktpaste 52 mit einer elektrisch leitenden Haftschicht oder der Heizleiterbahn der Heizeinrichtung in Kontakt kommt, jedoch derart ausgebildet, dass ihre Kontur an diejenige der Heizleiterbahn 44 angepasst ist. Da das Materialrohr 32 und die auf diesem angeordnete Dielektrikumschicht 42, die in Fig. 2 dargestellt sind, zylindrisch ausgebildet sind, weist auch die Heizleiterbahn 44 eine entsprechende Wölbung auf, an welche die Kontaktfläche 78 des Verbindungsabschnittes 74 des Anschlussstiftes 70 nunmehr angepasst ist. Auf diese Weise kann eine noch bessere Verbindung erzielt werden.

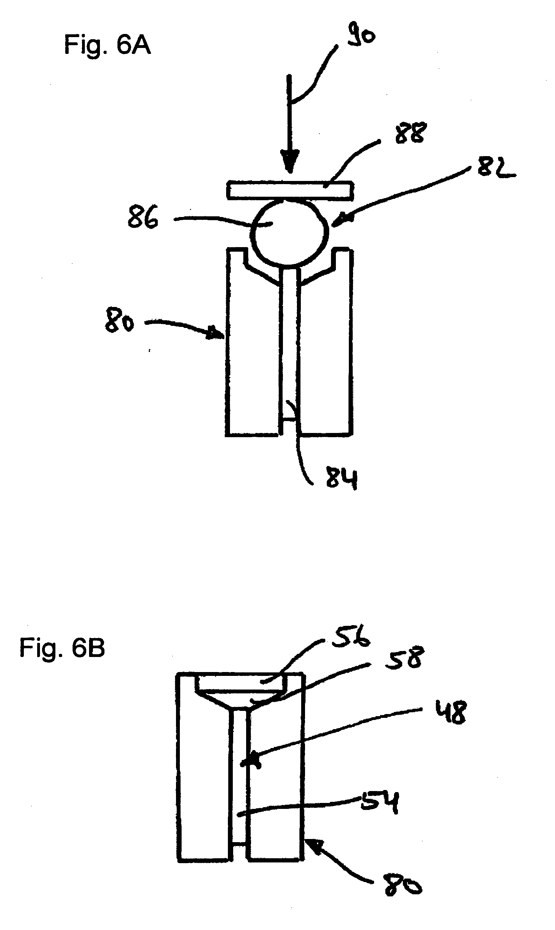

Die Fig. 6A und 6B sind schematische Ansichten und zeigen zwei aufeinander folgende Verfahrensschritte eines Herstellungsprozesses des in den Fig. 3 und 4 dargestellten Kontaktstiftes 48. Gemäß Fig. 6A wird in eine Pressform 80, welche die Negativkontur des Kontaktstiftes 48 aufweist, ein Rohling 82 eingesetzt, der einen stiftförmigen Bereich 84 und einen kugelförmigen Bereich 86 aufweist, die miteinander verbunden sind. Der Rohling 82 kann beispielsweise hergestellt werden, indem an einen stiftförmigen Bereich 84 der kugelförmige Bereich 86 angelötet wird. Natürlich sind jedoch auch andere Herstellungsverfahren denkbar. Der in die Pressform 80 eingesetzte Rohling 82 wird daraufhin über eine Druckplatte 88 in Richtung des Pfeils 90 mit einer vorbestimmten Druckkraft belastet, so dass der kugelförmige Bereich 86 in die Pressform 80 gepresst wird. Auf diese Weise wird, wie Fig. 6B zeigt, der Anschlussstift 48 mit dem stiftförmigen Abschnitt 54, dem Verbindungsabschnitt 56 und dem Übergangsabschnitt 58 erzeugt.

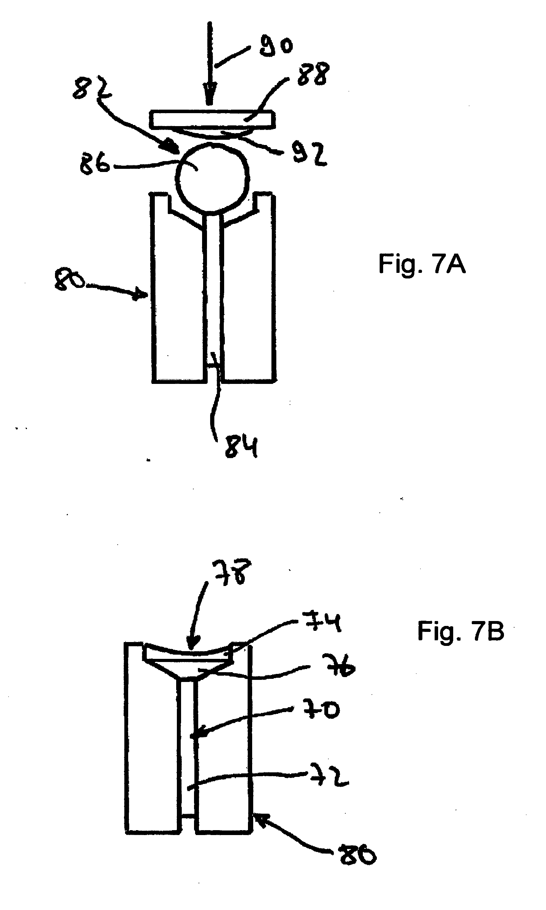

Die Fig. 7A und 7B sind schematische Ansichten und zeigen zwei aufeinander folgende Verfahrensschritte bei der Herstellung des in Fig. 5 dargestellten Kontaktstiftes 70. Das Herstellungsverfahren, das in den Fig. 7A, 7B dargestellt ist, unterscheidet sich lediglich dahingehend von dem in den Fig. 6A, 6B dargestellten Herstellungsverfahren, dass die Unterseite der Druckplatte 88 eine Wölbung 92 aufweist, um die gewölbte Kontaktfläche 78 des Anschlussstiftes 70 zu erzeugen, wie es in Fig. 7B gezeigt ist.

Die Erfindung ist nicht auf eine der vorbeschriebenen Ausführungsformen beschränkt, sondern in vielfältiger Weise abwandelbar. So sollte beispielsweise klar sein, dass die Konturierung der Kontaktfläche 78 des Anschlussstiftes 70 in Abhängigkeit von der Kontur des ersten elektrisch leitenden Bauteils, vorliegend also in Abhängigkeit von der Kontur des Materialrohrs 32, auch anders gewählt werden kann. Der Anschlussstift kann endseitig mit einer weiterführenden elektrischen Leitung, beispielsweise mit einem Kabel verbunden sein, welches an das Temperatur-Regelgerät angeschlossen wird.

Man erkennt jedoch, dass die Erfindung einen Anschlussstift zum Erzeugen eines elektrischen Anschlusses einer elektrischen Heizeinrichtung einer Spritzgießdüse betrifft, wobei der Anschlussstift derart ausgebildet ist, dass er mit Hilfe zumindest einer elektrisch leitenden Haftschicht und/oder einer Kontaktpaste an der Heizeinrichtung befestigbar ist, wobei der Anschlussstift einen stiftförmigen Abschnitt und einen mit der zumindest einen Haftschicht oder der Kontaktpaste in Kontakt kommenden Verbindungsabschnitt aufweist.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

| | | | |
|---|---|---|---|
| 10 | elektrischer Anschluss | 56 | Verbindungsabschnitt |
| 12 | Substrat | 57 | Kontaktfläche |
| 14 | Dielektrikumschicht | 58 | Übergangsabschnitt |
| 16 | Heizleiterbahn | 60 | elektrischer Anschluss |
| 18 | Anschlussleitung | 62 | erste Haftschicht |
| 20 | Kontaktpaste | 64 | zweite Haftschicht |
| 30 | Spritzgießdüse | 66 | dritte Haftschicht |
| 32 | Materialrohr | 70 | Anschlussstift |
| 34 | Sockel | 72 | stiftförmiger Abschnitt |
| 36 | Düsenspitze | 74 | Verbindungsabschnitt |
| 38 | Strömungskanal | 76 | Übergangsabschnitt |
| 40 | Wandung | 78 | Kontaktfläche |
| 42 | Dielektrikumschicht | 80 | Pressform |
| 44 | Heizleiterbahn | 82 | Rohling |
| 46 | Abdeckschicht | 84 | stiftförmiger Bereich |
| 48 | Anschlussstift | 86 | kugelförmiger Bereich |
| 50 | elektrischer Anschluss | 88 | Druckplatte |
| 52 | Kontaktpaste | 90 | Pfeil |
| 54 | stiftförmiger Abschnitt | 92 | Wölbung |

## Patentansprüche

1. Elektrischer Anschluss (50; 60) einer elektrischen Heizeinrichtung einer Spritzgießdüse (30), mit einem Anschlussstift (48; 70),
a) wobei der Anschlussstift (48; 70) derart ausgebildet ist, dass er mit Hilfe zumindest einer elektrisch leitenden Haftschicht (52; 62; 64; 66) und/oder einer Kontaktpaste (52) an der Heizeinrichtung befestigbar ist,
b) wobei der Anschlussstift (48; 70) einen stiftförmigen Abschnitt (54; 72) und einen mit der zumindest einen Haftschicht (52; 62; 64; 66) oder der Kontaktpaste (52) in Kontakt kommenden Verbindungsabschnitt (56; 74) aufweist, und
c) wobei der Verbindungsabschnitt (56; 74) scheibenförmig ausgebildet ist und einen größeren Durchmesser als der stiftförmige Abschnitt (64; 72) aufweist.

2. Anschluss nach Anspruch 1, **dadurch gekennzeichnet, dass** zwischen dem Verbindungsabschnitt (56; 74) des Anschlussstifts (48; 70) und der Heizeinrichtung wenigstens zwei eine Verbindung erzeugende, elektrisch leitende Haftschichten (52, 54, 56) angeordnet sind, wobei die Haftschichten (52, 54, 56) unterschiedliche Eigenschaften, unterschiedliche Zusammensetzungen und/oder unterschiedliche Haftschichtmaterialien aufweisen.

3. Anschluss nach Anspruch 2, **dadurch gekennzeichnet, dass** jede Haftschicht (52, 54, 56) an eine jeweils direkt benachbart angeordnete Haftschicht (52, 54, 56) und/oder an ein direkt benachbart angeordnetes elektrisch leitendes Bauteil (44, 48; 62; 70) angepasst ist.

4. Anschluss nach Anspruch 2 oder 3, **dadurch gekennzeichnet, dass** jede Haftschicht (52, 54, 56) derart gewählt oder ausgebildet ist, dass deren Eigenschaften, Zusammensetzung und/oder Haftschichtmaterial an die Eigenschaften, die Zusammensetzung und/oder das Haftschichtmaterial einer jeweils direkt benachbart angeordneten Haftschicht (52, 54, 56) und/oder an die Eigenschaften, die Zusammensetzung und/oder das Material eines direkt benachbart angeordneten elektrisch leitenden Bauteils (44, 48; 62; 70) angepasst ist.

5. Anschluss nach einem der Ansprüche 2 bis 4, **dadurch gekennzeichnet, dass** die Eigenschaften, die Zusammensetzung und/oder das Haftschichtmaterial einer jeden Haftschicht (52, 54, 56) derart gewählt ist, dass deren Haftfähigkeit an die Haftfähigkeit einer jeweils direkt benachbart angeordneten Haftschicht (52, 54, 56) und/oder an die Haftfähigkeit eines direkt benachbart angeordneten elektrisch leitenden Bauteils (44, 48; 62; 70) angepasst ist.

6. Anschluss nach einem der Ansprüche 2 bis 5, **dadurch gekennzeichnet, dass** jede Haftschicht (52, 54, 56) eine andere Haftfähigkeit aufweist.

7. Anschluss nach einem der Ansprüche 2 bis 6, **dadurch gekennzeichnet, dass** die Haftschichten (52; 54; 56) bezüglich ihrer Eigenschaften, ihrer Zusammensetzungen, ihrer Haftschichtmaterialien, ihrer Haftfähigkeiten und/oder ihrer Wärmeausdehnungseigenschaften einen Gradientenaufbau bilden.

8. Anschluss nach einem der Ansprüche 2 bis 7, **dadurch gekennzeichnet, dass** das Haftschichtmaterial jeder Haftschicht (52, 54, 56) ein Lötmaterial, eine Kontaktpaste oder eine Dickschichtpaste ist.

9. Anschluss nach einem der Ansprüche 2 bis 8, **dadurch gekennzeichnet, dass** das Haftschichtmaterial jeder Haftschicht (52, 54, 56) Silber, Palladium und/oder wenigstens einen Glasphasenanteil umfasst.

10. Anschluss nach einem der Ansprüche 1 bis 9, **dadurch gekennzeichnet, dass** die Heizeinrichtung eine Dickschichtheizung ist.

11. Anschluss nach einem der Ansprüche 1 bis 10, **dadurch gekennzeichnet, dass** die der Haftschicht (62; 64; 66) oder der Kontaktpaste (52) zugewandte Seite des Verbindungsabschnittes (56; 74) eine Kontur aufweist, die an die Kontur des anderen elektrisch leitenden Bauteils (44) angepasst ist.

12. Anschluss nach einem der vorhergehenden Ansprüche, **dadurch gekennzeichnet, dass** zwischen dem stiftförmigen Abschnitt (64; 72) und dem Verbindungsabschnitt (56; 74) zumindest ein Übergangsabschnitt (58; 76) vorgesehen ist, der derart ausgebildet ist, dass der Durchmesser des stiftförmigen Abschnittes (64; 72) und derjenige des Verbindungsabschnitts (56; 74) stufenartig oder kontinuierlich ineinander übergehen.

## Claims

1. Electrical connection (50; 60) of an electrical heating device of an injection-moulding nozzle (30), having a connecting pin (48; 70),
a) wherein the connecting pin (48; 70) is designed such that it can be fixed to the heating device by means of at least one electrically conductive adhesive layer (52; 62; 64; 66) and/or by a contact paste (52),
b) wherein the contact pin (48; 70) comprises a pin-shaped portion (54; 72) and a connecting portion (56; 74) which comes into contact with the at least one adhesive layer (52; 62; 64; 66) or with the contact paste (52), and
c) wherein the connecting portion (56; 74) is disc-shaped and comprises a larger diameter than the portion (64; 72) forming the pin.

2. Connection according to claim 1, **characterised in that** at least two electrically conductive adhesive layers (52, 54, 56), which produce a connection, are arranged between the connecting portion (56; 74) of the connecting pin (48; 70) and the heating device, the adhesive layers (52, 54, 56) having different properties, different compositions and/or different adhesive layer materials.

3. Connection according to claim 2, **characterised in that** each adhesive layer (52, 54, 56) is matched to a respectively directly adjacent adhesive layer (52, 54, 56) and/or to a directly adjacent electrically conductive component (44, 48; 62; 70).

4. Connection according to either claim 2 or claim 3, **characterised in that** each adhesive layer (52, 54, 56) is selected or designed such that its properties, composition and/or adhesive layer material match the properties, the composition and/or the adhesive layer material of a respectively directly adjacent adhesive layer (52, 54, 56) and/or the properties, the composition and/or the material of a directly adjacent electrically conductive component (44, 48; 62; 70).

5. Connection according to any of claims 2 to 4, **characterised in that** the properties, the composition and/or the adhesive layer material of each adhesive layer (52, 54, 56) is selected such that the adhesiveness thereof is matched to the adhesiveness of a respectively directly adjacent adhesive layer (52, 54, 56) and/or to the adhesiveness of a directly adjacent electrically conductive component (44, 48; 62; 70).

6. Connection according to any of claims 2 to 5, **characterised in that** each adhesive layer (52, 54, 56) exhibits a different adhesiveness.

7. Connection according to any of claims 2 to 6, **characterised in that** with respect to their properties, their compositions, their adhesive layer materials, their adhesiveness and/or their properties of thermal expansion, the adhesive layers (52; 54; 56) are graduated.

8. Connection according to any of claims 2 to 7, **characterised in that** the adhesive layer material of each adhesive layer (52, 54, 56) is a solder, a contact paste or a thick film paste.

9. Connection according to any of claims 2 to 8, **characterised in that** the adhesive layer material of each adhesive layer (52, 54, 56) includes silver, palladium and/or at least a glass phase proportion.

10. Connection according to any of claims 1 to 9, **characterised in that** the heating device is a thick film heater.

11. Connection according to any of claims 1 to 10, **characterised in that** the side of the connecting portion (56; 74) facing the adhesive layer (62; 64; 66) or facing the contact paste (52) has a shape that is matched to the shape of the other electrically conductive component (44).

12. Connection according to any of the preceding claims, **characterised in that** at least one transitional portion (58; 76) is provided between the pin-shaped portion (64; 72) and the connecting portion (56; 74), which transitional portion is formed such that the diameter of the pin-shaped portion (64; 72), and that of the connecting portion (56; 74), transition into one another either in a step-like manner or continuously.

## Revendications

1. Connexion électrique (50 ; 60) d'un dispositif de chauffage électrique d'une tuyère de moulage par injection (30), comprenant une broche de connexion (48 ; 70),
a) dans laquelle la broche de connexion (48 ; 70) est conçue de manière qu'elle puisse être fixée au dispositif de chauffage au moyen d'au moins une couche adhésive conductrice de l'électricité (52 ; 62 ; 64 ; 66) et/ou d'une pâte de contact (52),
b) dans laquelle la broche de connexion (48 ; 70) présente une section en forme de broche (54 ; 72) et une section de jonction (56 ; 74) venant en contact avec la au moins une couche adhésive (52 ; 62 ; 64 ; 66) ou la pâte de contact (52), et
c) dans laquelle la section de jonction (56 ; 74) est conformée en disque et présente un diamètre plus grand que celui de la section en forme de broche (64 ; 72).

2. Connexion selon la revendication 1, **caractérisée en ce qu'**entre la section de jonction (56 ; 74) de la broche de connexion (48 ; 70) et le dispositif de chauffage sont disposées au moins deux couches adhésives conductrices de l'électricité (52, 54, 56) formant une jonction, dans laquelle les couches adhésives (52, 54, 56) présentent différentes propriétés, différentes compositions et/ou différents matériaux de couche adhésive.

3. Connexion selon la revendication 2, **caractérisée en ce que** chaque couche adhésive (52, 54, 56) est adaptée à une couche adhésive (52, 54, 56) respectivement disposée directement au voisinage et/ou à un composant conducteur de l'électricité (44, 48 ; 62 ; 70) disposé directement au voisinage.

4. Connexion selon la revendication 2 ou la revendication 3, **caractérisée en ce que** chaque couche adhésive (52, 54, 56) est choisie ou conformée de manière que ses propriétés, sa composition et/ou son matériau de couche adhésive soient adaptés aux propriétés, à la composition et/ou au matériau de couche adhésive d'une couche adhésive (52, 54, 56) respectivement disposée directement au voisinage et/ou aux propriétés, à la composition et/ou au matériau d'un composant conducteur de l'électricité (44, 48 ; 62 ; 70) disposé directement au voisinage.

5. Connexion selon l'une quelconque des revendications 2 à 4, **caractérisée en ce que** les propriétés, la composition et/ou le matériau de couche adhésive de chaque couche adhésive (52, 54, 56) sont choisis de manière que son adhésivité soit adaptée à l'adhésivité d'une couche adhésive (52, 54, 56) respectivement disposée directement au voisinage et/ou à l'adhésivité d'un composant conducteur de l'électricité (44, 48 ; 62 ; 70) disposé directement au voisinage.

6. Connexion selon l'une quelconque des revendications 2 à 5, **caractérisée en ce que** chaque couche adhésive (52, 54, 56) présente une autre adhésivité.

7. Connexion selon l'une quelconque des revendications 2 à 6, **caractérisée en ce que** les couches adhésives (52, 54, 56) forment au plan de leurs propriétés, de leur composition, de leurs matériaux de couche adhésive, de leurs adhésivités et/ou de leurs propriétés de dilatation thermique une structure de gradient.

8. Connexion selon l'une quelconque des revendications 2 à 7, **caractérisée en ce que** le matériau adhésif de chaque couche adhésive (52, 54, 56) est un matériau de brasage, une pâte de contact ou une pâte pour couche de garnissage.

9. Connexion selon l'une quelconque des revendications 2 à 8, **caractérisée en ce que** le matériau adhésif de chaque couche adhésive (52, 54, 56) comprend de l'argent, du palladium et/ou au moins une fraction de phase vitreuse.

10. Connexion selon l'une quelconque des revendications 1 à 9, **caractérisée en ce que** le dispositif de chauffage est un chauffage en couche épaisse.

11. Connexion selon l'une quelconque des revendications 1 à 10, **caractérisée en ce que** le côté de la section de jonction (56 ; 74) tourné vers la couche adhésive (52, 54, 66) ou la pâte de contact (52) présente un contour qui est adapté au contour de l'autre composant conducteur de l'électricité (44).

12. Connexion selon l'une quelconque des revendications précédentes, **caractérisée en ce qu'**il est prévu entre la section en forme de broche (64 ; 72) et la section de jonction (56 ; 74) au moins une section de passage (58 ; 76) qui est conformée de sorte que le diamètre de la section en forme de broche (64 ; 72) et celui de la section de jonction (56 ; 74) se convertissent l'un dans l'autre de manière étagée ou continue.
